# FASCICULE DE BREVET EUROPEEN

(11) **EP 1 894 791 B1**
(45) Date de publication et mention de la délivrance du brevet: **03.11.2010**
(21) Numéro de dépôt: 07301245.2
(22) Date de dépôt: 18.07.2007
(51) Int. Cl.: B60R 19/18, B60R 19/34

(54) **Poutre d'absorption d'énergie pour pare-chocs de véhicule automobile et véhicule automobile comprenant une telle poutre**
Energieabsorptionsträger für einen Kraftfahrzeugsstossfänger und Kraftfahrzeug mit einem solchen Träger
Energy absorption beam for bumper of an automobile and automobile containing such a beam.

(30) Priorité: 29.08.2006 FR 0653503
(43) Date de publication de la demande: 05.03.2008
(73) Titulaire: PEUGEOT CITROËN AUTOMOBILES S.A., 78140 Vélizy Villacoublay (FR)
(72) Inventeur: Groeninck, François, 95170 Deuil La Barre (FR)

(56) Documents cités:
- EP-A2- 1 083 098
- DE-A1- 19 711 647
- US-A1- 2002 063 433
- US-A1- 2002 167 183

## Description

La présente invention concerne une poutre d'absorption d'énergie pour un pare-chocs de véhicule automobile, ainsi qu'un véhicule automobile équipé d'une telle poutre.

Les constructeurs automobiles ont pour souci d'améliorer la sécurité des passagers et de réduire les coûts de réparation des véhicules en cas de choc, tout en évitant une augmentation sensible du poids du véhicule.

Les véhicules doivent satisfaire à certaines contraintes notamment lors de chocs standards correspondant notamment aux chocs dits "piéton" et aux chocs "faible vitesse".

En simulation, un choc dit piéton est un choc à 40 km/h contre des éléments adaptés ce qui permet de vérifier que les risques de blessures graves d'un piéton au niveau de ses jambes sont limités. Un choc dit "faible vitesse" est un choc à 16 km/h contre un obstacle rigide. Lors d'un tel choc, la poutre d'absorption d'énergie du véhicule doit conserver son intégrité de sorte que le véhicule puisse continuer à rouler même si cette poutre est endommagée.

Les exigences de ces deux chocs sont donc contradictoires dans la mesure où le choc dit "piéton" requiert une poutre de pare-chocs dont le comportement aux chocs soit mou, tandis que le choc dit "faible vitesse" requiert une poutre dont le comportement aux chocs soit rigide.

On connaît dans le document FR-A-2 840 574, une poutre de pare-chocs qui permet de satisfaire à ces exigences contradictoires et qui comporte une région arrière de raideur déterminée pour les chocs plus importants et une région avant de raideur déterminée pour les chocs plus faibles. Les deux régions c'est à dire la région avant et la région arrière, sont placées l'une derrière l'autre.

Cette disposition présente un inconvénient qui réside principalement dans le fait que, lors d'un choc piéton, la déformation de la partie avant selon l'axe longitudinal du véhicule est peu importante, ce qui entraîne une sollicitation de l'ensemble de la poutre selon un axe transversal perpendiculaire à cet axe longitudinal. De ce fait, la poutre doit être changée et les pièces placées à proximité de cette poutre peuvent aussi être endommagées.

L'invention a pour but de proposer une poutre d'absorption d'énergie qui évite cet inconvénient et qui permet d'optimiser l'absorption d'énergie.

L'invention a donc pour objet une poutre d'absorption d'énergie pour pare-chocs de véhicule automobile, du type comprenant une partie centrale formant traverse et deux branches latérales disposées chacune à une extrémité de la partie centrale, chaque branche latérale s'étendant sensiblement perpendiculairement à cette partie centrale et étant destinée à être fixée sur le prolongement d'un longeron par une pièce de liaison, caractérisée en ce que chaque branche latérale est formée par un corps creux comprenant une partie avant et une partie arrière comportant un fourreau interne en forme de tronc de cône dont la plus petite extrémité est disposée dans un orifice calibré de forme conjuguée à cette extrémité et ménagé dans ladite pièce de liaison.

Une poutre d'absorption d'énergie similaire présentant des corps creux en forme de tronc de cône est décrit dans le document DE-A-197 11 647.

Selon d'autres caractéristiques de l'invention,
- la paroi du fourreau en forme de tronc de cône converge vers l'arrière du véhicule,
- la paroi du fourreau comporte, sur sa surface externe, au moins une moulure longitudinale,
- le fourreau comporte intérieurement des nervures longitudinales disposées entre la surface interne de la paroi de ce fourreau et un cylindre concentrique audit fourreau,
- chaque nervure présente un profil en S,
- la partie avant du corps creux de chaque branche latérale est en saillie par rapport à la partie centrale formant traverse,
- la partie avant du corps creux de chaque branche latérale comporte intérieurement des nervures longitudinales de renfort,
- la poutre comporte devant la poutre centrale formant traverse, une paroi souple en forme de C pour absorber les chocs dit "piéton", et
- la poutre est réalisée par moulage en une seule pièce en matière plastique.

L'invention a également pour objet un véhicule automobile comprenant une poutre d'absorption d'énergie, caractérisée en ce que la poutre est une poutre telle que précédemment mentionnée.

L'invention sera mieux comprise à la lecture de la description qui va suivre, donnée à titre d'exemple et faite en se référant aux dessins annexés, sur lesquels :
- la Fig. 1 est une vue schématique en perspective d'une poutre d'absorption d'énergie, conforme à l'invention,
- la Fig. 2 est une vue schématique en perspective de la poutre de la Fig. 1, après le moulage de cette poutre,
- la Fig. 3 est une vue schématique de dessus en coupe horizontale de la poutre d'absorption d'énergie montée sur des longerons d'un véhicule automobile,
- la Fig. 4 est une vue schématique en coupe verticale de la partie centrale de la poutre d'absorption d'énergie, conforme à l'invention, montrant la poutre juste après moulage et après assemblage,
- la Fig. 5 est une vue schématique en coupe verticale d'une branche latérale de la poutre d'absorption d'énergie conforme à l'invention,
- la Fig. 6 est une demi-vue de face de la poutre d'absorption d'énergie, conforme à l'invention, et
- la Fig. 7 est une vue partielle en perspective d'une variante de la poutre d'absorption d'énergie, conforme à l'invention.

Dans la description qui va suivre, les orientations utilisées sont les orientations habituelles d'un véhicule automobile et les termes "avant" et "arrière" s'entendent par rapport au sens de la marche normale du véhicule automobile.

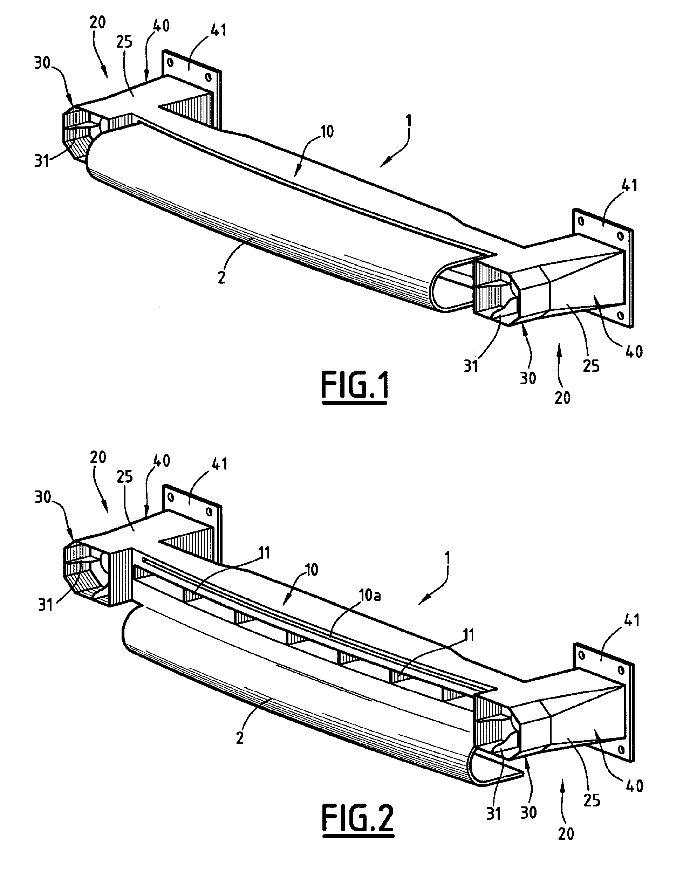

Sur la Fig. 1, on a représenté schématiquement une poutre d'absorption d'énergie désignée dans son ensemble par la référence 1 et qui permet de satisfaire aux contraintes des chocs dits "piéton" ainsi qu'aux chocs dits "faible vitesse".

Cette poutre 1 comprend une partie centrale 10 formant traverse déterminant une zone dédiée aux chocs à faible vitesse et deux branches latérales 20 disposées chacune à une extrémité de la partie centrale 10 formant également une zone dédiée aux chocs à faible vitesse.

La poutre 1 d'absorption d'énergie est également équipée, à l'avant de la partie centrale 10, d'une paroi souple 2 en forme de C formant une zone dédiée aux chocs dits "piéton".

L'ensemble de la poutre d'absorption d'énergie 1 est réalisé par moulage d'une seule pièce en matière plastique.

A titre d'exemple, la partie centrale 10 formant traverse est réalisée dans le même matériau que les branches latérales 20 et de préférence en matière thermoplastique ou en thermodurcissable chargé, comme par exemple en polypropylène chargé de fibres de verre de façon à obtenir des caractéristiques de rigidité de ces deux éléments supérieures à celles de la paroi souple 2 qui elle est réalisée en thermoplastique non chargé, comme par exemple en polypropylène non chargé ou en élastomère.

Lors du moulage de l'ensemble de la poutre 1, la partie centrale 10 ainsi que les branches latérales 20 sont injectées dans un premier temps et la paroi souple 2 est injectée dans un second temps dans le même moule.

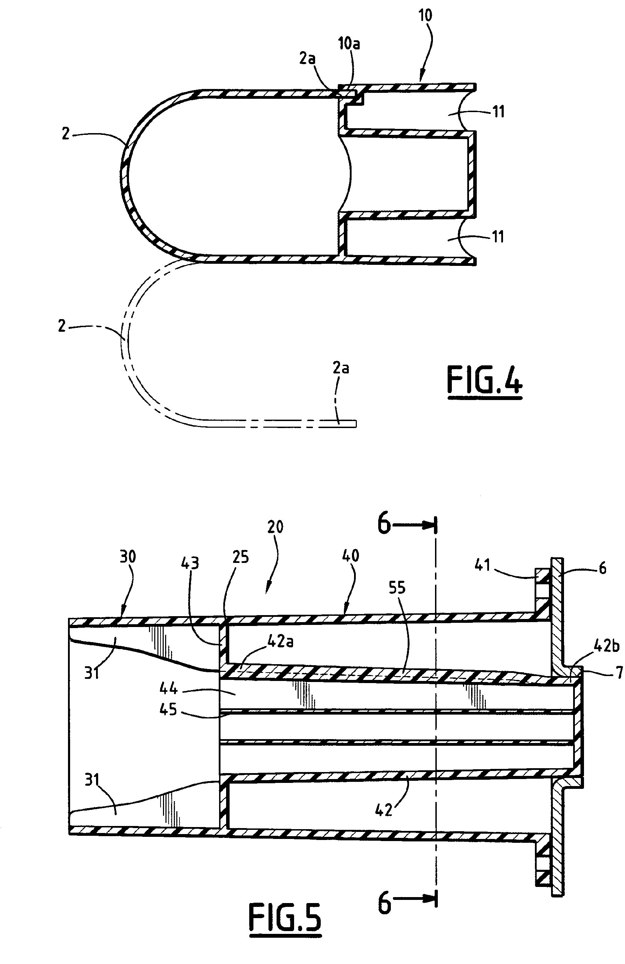

Ainsi que montré sur les Figs. 2 et 4, la paroi souple 2 est, à la sortie du moule, disposée au-dessous de la partie principale 10 formant traverse, comme représentée en traits mixtes à la Figure 4. Après moulage, cette paroi souple 2 est retournée et son bord libre 2a est engagé dans une gorge 10a ménagée sur le bord supérieur de la partie centrale 10 afin qu'elle occupe une position permettant de remplir son rôle d'absorption de chocs dits piéton.

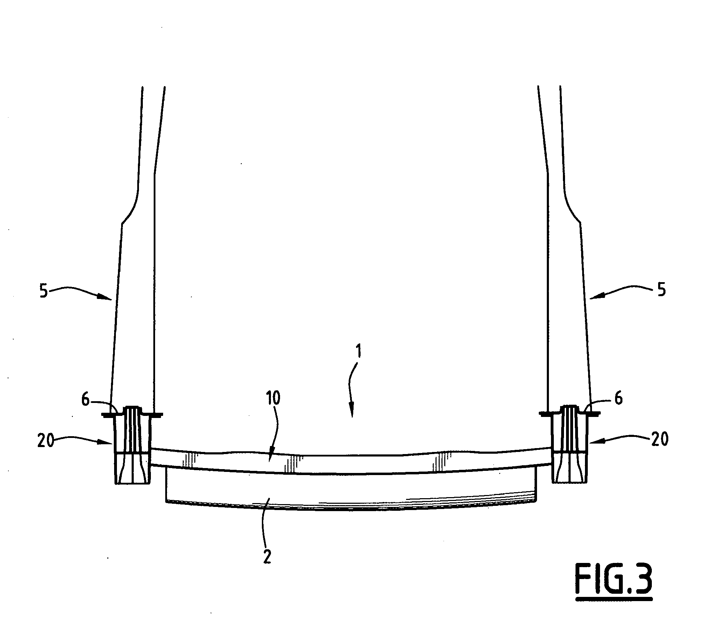

Ainsi que montré à la Fig. 3, chaque branche latérale 20 est destinée à être fixée dans le prolongement d'un longeron 5 par l'intermédiaire d'une pièce de liaison 6, comme on le verra ultérieurement.

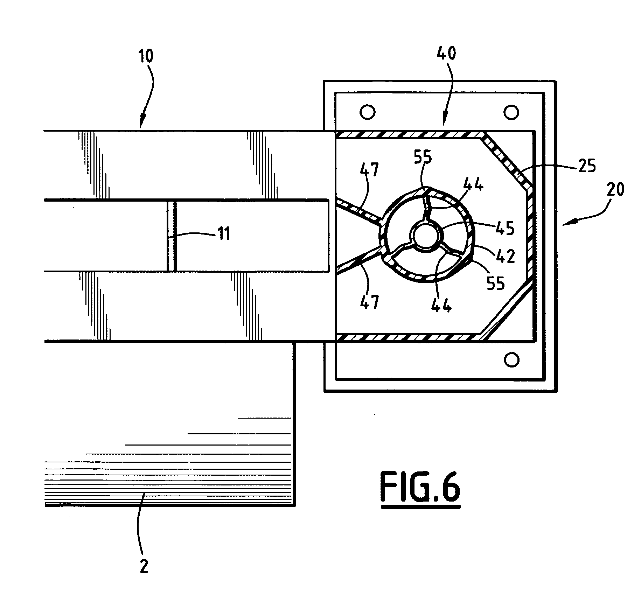

En se reportant maintenant aux Figs. 5 et 6, on va décrire une branche latérale 20, l'autre branche latérale 20 étant identique.

La branche latérale 20 est formée par un corps creux 25 comprenant une partie avant 30 en saillie par rapport à la partie centrale 10 formant traverse et une partie arrière 40 munie à son extrémité libre d'un rebord 41 destiné à être appliqué sur la pièce de liaison 6 avec le longeron 5.

La fixation de la branche centrale 20 sur le longeron 5 par l'intermédiaire de la pièce de liaison 6 est assurée par des organes appropriés, de type connu, comme par exemple des organes de vissage, non représentés.

Comme cela apparaît à la Fig. 5, la partie arrière 40 du corps creux 25 comprend un fourreau interne 42 disposé concentriquement audit corps creux 25 et qui présente la forme d'un tronc de cône. Ce fourreau interne 42 comporte une extrémité avant 42a de plus grandes dimensions, reliée au corps creux 25 par une paroi transversale 43 et une extrémité arrière 42b de plus petites dimensions. Cette extrémité arrière 42b est disposée dans un orifice calibré 7 de forme conjuguée à cette extrémité arrière, et ménagé dans la pièce de liaison 6.

La paroi du fourreau 42 en forme de tronc de cône converge vers l'arrière du véhicule automobile.

Dans le mode de réalisation préférentiel représenté sur les Figs. 5 et 6, la paroi du fourreau 42 comporte, sur sa surface externe, au moins une moulure 55 s'étendant sur toute la longueur du fourreau 42. De préférence, le nombre de moulures 55 est au nombre de trois uniformément réparties sur la périphérie du fourreau 42.

De plus, ce fourreau 42 comporte intérieurement des nervures longitudinales 44 disposées entre la surface interne de la paroi de ce fourreau 42 et un cylindre 45 concentrique audit fourreau 42. De préférence et ainsi que montré à la Fig. 6, chaque nervure 44 présente un profil en forme de S et elles sont également au nombre trois, comme les moulures 55.

La partie avant 30 du corps creux 25 de chaque branche latérale 20 comporte intérieurement des nervures longitudinales 31.

Enfin, des nervures transversales 47 (Fig. 6) peuvent être ménagées entre le fourreau 42 et la paroi interne de la partie arrière 40 du corps creux 25.

La paroi souple 2 disposée devant la partie centrale 10 formant traverse est dédiée aux chocs dits "piéton" et cette partie centrale 10 ainsi que les branches latérales 20 sont dédiées aux chocs dits à "faible vitesse". La partie centrale 10 est également dimensionnée pour absorber des chocs dits à "grande vitesse" et, à cet effet, elle permet de maintenir les longerons 5. Lors d'un choc dit à "faible vitesse", la partie avant 30 du corps creux 25 de chaque branche latérale 20 travaille par déformation, puis par rupture progressive du matériau composant cette partie avant 30. Par ailleurs, lors d'un tel choc, le fourreau 42 de la partie arrière 40 de chaque branche latérale 20 travaille par frettage, ce fourreau 42 pénétrant dans l'orifice calibré 7 de la pièce de liaison 6. La paroi du corps creux 25 va se plier ou se rompre selon la violence du choc.

La forme en S de ces nervures 44 va permettre en fonction de leur nombre, de leur forme plus ou moins accentuée, d'ajuster l'effort de déformation aux chocs lors du passage du fourreau 42 en forme de tronc de cône dans l'orifice calibré 7 de la pièce de liaison 6.

Le rebord 41 du corps cylindrique 25 travaille par déformation et rupture lors d'un choc dit à "faible vitesse".

Les nervures 31 de la partie avant 30 du corps creux 25 permettent d'obtenir l'effort nécessaire et suffisant pour absorber l'énergie voulue par cette partie avant 30.

Ainsi que montré notamment à la Fig. 2, la partie centrale 10 formant traverse comporte des nervures verticales 11 espacées les unes des autres qui permettent d'ajuster la tenue au choc en fonction du besoin.

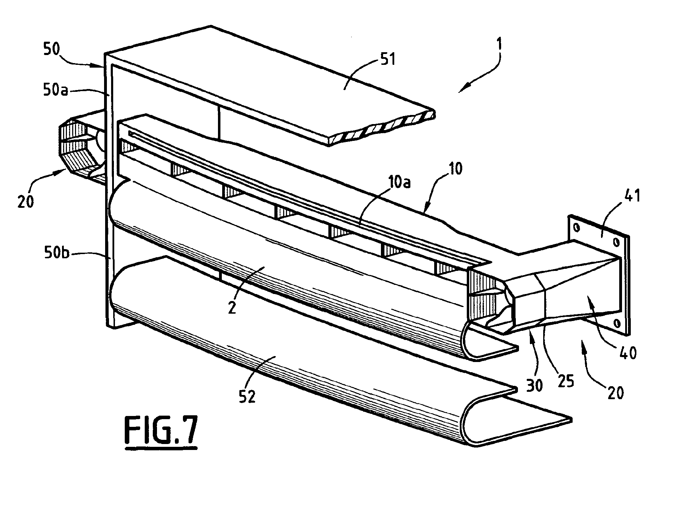

Selon une variante représentée à la Fig. 7, la poutre d'absorption d'énergie 1 comporte, à chaque extrémité de la partie centrale 10 formant traverse, une paroi latérale sensiblement verticale 50. Les parois latérales 50 sont reliées à leur partie supérieure, par une cloison supérieure 51 sensiblement horizontale qui sert de liaison avec une peau de pare-chocs, non représentée, et qui sert également de cloison anti-recyclage pour conduire l'air frais jusqu'au radiateur du groupe motopropulseur du véhicule. Cette cloison 51 évite également le recyclage de l'air chaud.

Les parois latérales 50 sont également reliées à leur partie inférieure, par une cloison inférieure 52 sensiblement horizontale qui sert de cloison anti-recyclage dont le rôle est de conduire l'air frais jusqu'au radiateur et qui sert également de moyens d'absorption pour un choc piéton. Les cloisons 51 et 52 sont fixées sur la façade technique du véhicule automobile, non représentée.

Dans ce mode de réalisation, la partie centrale 10 et les branches latérales 20 sont réalisées dans le même matériau et de préférence en matière thermoplastique ou en thermodurcissable chargé, comme par exemple du polypropylène chargé en fibres de verre. La paroi souple 2, la cloison inférieure 42 et la portion inférieure 50b des parois latérales 50 sont réalisées dans le même matériau, de préférence en matière thermoplastique non chargé, comme par exemple du polypropylène non chargé ou en élastomère. La portion supérieure 50a des parois latérales 50 et la cloison supérieure 51 sont réalisées dans le même matériau, de préférence un polypropylène auquel est ajouté de l'EPDM.

Le fait de réaliser la poutre d'absorption d'énergie conforme à l'invention en une seule pièce par moulage permet d'obtenir un gain de poids du fait qu'il existe aucun organe de fixation entre les différents éléments composant cette poutre et permet également d'obtenir un gain de temps au montage.

De plus, le fait d'avoir une pièce moulée permet d'avoir une plus grande possibilité dans la définition géométrique de la pièce, permettant par l'ajout de moulures et surtout de nervures d'ajuster la variation de l'effort nécessaire à l'absorption d'énergie pendant tout le déroulement du choc.

Enfin, après un choc dit à "faible vitesse", l'intégrité de la poutre est conservée ce qui permet au véhicule de pouvoir rouler après un tel choc.

## Revendications

1. Poutre d'absorption d'énergie pour pare-chocs de véhicule automobile, du type comprenant une partie centrale (10) formant traverse et deux branches latérales (20) disposées chacune à une extrémité de la partie centrale (10), chaque branche latérale (20) s'étendant sensiblement perpendiculairement à cette partie centrale (10) et étant destinée à être fixée dans le prolongement d'un longeron (5) par une pièce de liaison (6), **caractérisée en ce que** chaque branche latérale (20) est formée par un corps creux (25) comprenant une partie avant (30) et une partie arrière (40) comportant un fourreau (42) interne en forme de tronc de cône dont la petite extrémité (42b) est disposée dans un orifice calibré (7) de forme conjuguée à cette extrémité (42b) et ménagé dans ladite pièce de liaison (6).

2. Poutre selon la revendication 1, **caractérisée en ce que** la paroi du fourreau (42) en forme de tronc de cône converge vers l'arrière du véhicule.

3. Poutre selon la revendication 1 ou 2, **caractérisée en ce que** la paroi du fourreau (42) comporte, sur sa surface externe, au moins une moulure longitudinale (55).

4. Poutre selon l'une quelconque des revendications 1 à 3, **caractérisée en ce que** le fourreau (42) comporte intérieurement des nervures (44) longitudinales disposées entre la surface interne de la paroi de ce fourreau (42) et un cylindre (45) concentrique audit fourreau (42).

5. Poutre selon la revendication 4, **caractérisée en ce que** chaque nervure (44) présente un profil en S.

6. Poutre selon l'une quelconque des revendications 1 à 5, **caractérisée en ce que** la partie avant (30) du corps creux (25) de chaque branche latérale (20) est en saillie par rapport à la partie centrale (10) formant traverse.

7. Poutre selon l'une quelconque des revendications 1 à 6, **caractérisée en ce que** la partie avant (30) du corps creux (25) de chaque branche latérale (20) comporte intérieurement des nervures longitudinales (31) de renfort.

8. Poutre selon l'une quelconque des revendications précédentes, **caractérisée en ce qu'**elle comporte devant la poutre centrale (10) formant traverse, une paroi souple (2) en forme de C pour absorber les chocs dits "piéton".

9. Poutre selon l'une quelconque des revendications précédentes, **caractérisée en ce qu'**elle est réalisée par moulage en une seule pièce en matière plastique.

10. Véhicule automobile **caractérisé en qu'**il comprend une poutre d'absorption d'énergie (1), selon l'une quelconque des revendications précédentes.

## Claims

1. An energy absorption beam for the bumper of an automobile vehicle, of the type comprising a central part (1) forming a crossmember and two lateral branches (20) each arranged at an end of the central part (10), each lateral branch (20) extending substantially perpendicularly to this central part (10) and being intended to be fixed in the extension of a side member (5) by a connecting piece (6), **characterized in that** each lateral branch (20) is formed by a hollow body (25) comprising a front part (30) and a rear part (4) including an internal sleeve (42) in the shape of a frustum of a cone, the small end (42b) of which is disposed in a calibrated orifice (7) of a conjugate shape to this end (42b) and arranged in the said connecting piece (6).

2. The beam according to Claim 1, **characterized in that** the wall of the sleeve (42) in the shape of a frustum of a cone converges towards the rear of the vehicle.

3. The beam according to Claim 1 or 2, **characterized in that** the wall of the sleeve (42) comprises, on its external surface, at least one longitudinal moulding (55).

4. The beam according to any one of Claims 1 to 3, **characterized in that** the sleeve (42) comprises on the interior longitudinal ribs (44) disposed between the internal surface of the wall of this sleeve (42) and a cylinder (45) concentric to the said sleeve (42).

5. The beam according to Claim 4, **characterized in that** each rib (44) presents an S-shaped profile.

6. The beam according to any one of Claims 1 to 5, **characterized in that** the front part (30) of the hollow body (25) of each lateral branch (20) is protruding with respect to the central part (10) forming the crossmember.

7. The beam according to any one of Claims 1 to 6, **characterized in that** the front part (30) of the hollow body (25) of each lateral branch (20) comprises in the interior longitudinal reinforcing ribs (31).

8. The beam according to any one of the preceding claims, **characterized in that** it comprises, in front of the central beam (10) forming the crossmember, a flexible C-shaped wall (2) to absorb the shocks known as "pedestrian" shocks.

9. The beam according to any one of the preceding claims, **characterized in that** it is realized by moulding in a single piece of plastic material.

10. An automobile vehicle, **characterized in that** it comprises an energy absorption beam (1) according to any one of the preceding claims.

## Patentansprüche

1. Energieabsorptionsbalken für Stoßfänger für Kraftfahrzeug des Typs, der einen zentralen Teil (10) aufweist, der einen Querbalken bildet, und zwei seitliche Schenkel (20), die jeweils an einem Ende des zentralen Teils (10) angeordnet sind, wobei sich jeder seitliche Schenkel (20) im Wesentlichen senkrecht zu diesem zentralen Teil (10) erstreckt und dazu bestimmt ist, in der Verlängerung eines Längsbalkens (5) durch einen Verbindungsteil (6) befestigt zu werden, **dadurch gekennzeichnet, dass** jeder seitliche Schenkel (20) aus einem Hohlkörper (25) besteht, der einen vorderen Teil (30) und einen hinteren Teil (40) aufweist, der eine innere Hülse (42) in Kegelstumpfform aufweist, dessen kleiner Endteil (42b) in einer kalibrierten Öffnung (7) mit zu diesem Ende (42b) passender Form und die in diesem Verbindungsteil (6) eingerichtet ist, angeordnet ist.

2. Balken nach Anspruch 1, **dadurch gekennzeichnet, dass** die Wand der Hülse (42) in Kegelstumpfform zur Rückseite des Fahrzeugs konvergiert.

3. Balken nach Anspruch 1 oder 2, **dadurch gekennzeichnet, dass** die Wand der Hülse (42) auf ihrer Außenfläche mindestens eine Längsleiste (55) aufweist.

4. Balken nach einem der Ansprüche 1 bis 3, **dadurch gekennzeichnet, dass** die Hülse (42) innen Längsrippen (44) aufweist, die zwischen der Innenfläche der Wand dieser Hülse (42) und einem zu der Hülse (42) konzentrischen Zylinder (45) angeordnet sind.

5. Balken nach Anspruch 4, **dadurch gekennzeichnet, dass** jede Rippe (44) ein S-Profil aufweist.

6. Balken nach einem der Ansprüche 1 bis 5, **dadurch gekennzeichnet, dass** der vordere Teil (30) des Hohlkörpers (25) jedes seitlichen Schenkels (20) in Bezug zu dem zentralen Teil (10), der den Balken bildet, vorsteht.

7. Balken nach einem der Ansprüche 1 bis 6, **dadurch gekennzeichnet, dass** der vordere Teil (30) des Hohlkörpers (25) jedes seitlichen Schenkels (20) innen Verstärkungslängsrippen (31) aufweist.

8. Balken nach einem der vorhergehenden Ansprüche, **dadurch gekennzeichnet, dass** er vor dem zentralen Balken (10), der den Querbalken bildet, eine biegsame Wand (2) in C-Formel aufweist, um so genannte "Fußgänger"-Stöße zu absorbieren.

9. Balken nach einem der vorhergehenden Ansprüche, **dadurch gekennzeichnet, dass** er durch Formen aus einem einzigen Stück aus Kunstharz hergestellt wird.

10. Kraftfahrzeug, **dadurch gekennzeichnet, dass** es einen Energieabsorptionsbalken (1) nach einem der vorhergehenden Ansprüche aufweist.
